# EUROPÄISCHE PATENTANMELDUNG

(11) **EP 2 575 280 A1**
(43) Veröffentlichungstag der Anmeldung: **03.04.2013**
(21) Anmeldenummer: 11182953.7
(22) Anmeldetag: 27.09.2011
(51) Int. Cl.: H04L 1/18, H04L 1/00, H04L 12/403, H04L 12/40

(54) **Verfahren zum Betrieb eines Automatisierungsgeräts zum Vermeiden von Datenverlusten sowie entsprechendes Datenübertragungsverfahren**

(71) Anmelder: Siemens Aktiengesellschaft, 80333 München (DE)
(72) Erfinder: Jänicke, Peter, 91058 Erlangen (DE); Seebahn, Björn, 91054 Erlangen (DE); Walders, Hanno, 91056 Erlangen (DE)

(57) **Zusammenfassung**

Die Erfindung betrifft ein Verfahren zum Betrieb eines Automatisierungsgeräts (12-16, 18), wobei das Automatisierungsgerät (12-16, 18) zumindest an ein anderes Automatisierungsgerät (12-16, 18) über eine kommunikative Verbindung Daten in Form von zu Datenpaketen zusammengefassten Datenblöcken (22) übermittelt und wobei eine Mehrzahl von Datenblöcken (22) nacheinander in einem Kommunikationszyklus (24) übertragen werden, wobei bei dem Verfahren in jedem Kommunikationszyklus (24) ein Teil einer Dauer des Kommunikationszyklus (24) für Übertragungswiederholungen reserviert wird und jeder Kommunikationszyklus (24) damit in ein erstes Zeitfenster (28) für Datenblöcke (22) und ein zweites, reserviertes Zeitfenster (30) unterteilt ist und dass ein eventueller fehlerhafter Datenblock (22) im zweiten, reservierten Zeitfenster (30) erneut übertragen wird.

## Beschreibung

Die Erfindung betrifft ein Verfahren zum Betrieb eines Automatisierungsgeräts, insbesondere eines Antriebssystems als ein Beispiel für ein Automatisierungsgerät, zum Vermeiden von Datenverlusten bei einer Datenübertragung von dem Automatisierungsgerät zu einem anderen Automatisierungsgerät oder zu einem sonstigen Empfänger und damit also auch ein Verfahren zur Übertragung von Daten und zur Vermeidung oder Verringerung von Datenverlusten.

Der Begriff Automatisierungsgerät umfasst sämtliche Geräte, Einrichtungen oder Systeme, also neben z.B. Steuerungen, wie speicherprogrammierbaren Steuerungen, Prozessrechnern, (Industrie-)Computern, dezentralen Peripheriegeräten, Bedien-und Beobachtungsgeräten und dergleichen auch Antriebs- oder sonstige Aggregatsteuerungen, Frequenzumrichter und Ähnliches, wie sie zur Steuerung, Regelung, Überwachung und/oder Beeinflussung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

Derartige Automatisierungsgeräte sind an sich bekannt. Die Anmelderin der vorliegenden Erfindung liefert z.B. unter der Marke SIMATIC Automatisierungsgeräte in Form von speicherprogrammierbaren Steuerungen, dezentralen Peripheriegeräten, Bedien- und Beobachtungsgeräten usw. sowie unter den Marken SI-NUMERIK und SINAMICS Antriebs- oder sonstige Aggregatsteuerungen, Frequenzumrichter und Ähnliches. Bei derartigen Automatisierungsgeräten ist zum Transfer von Daten von oder zum jeweiligen Automatisierungsgerät eine kommunikative Verbindung des jeweiligen Automatisierungsgeräts mit zumindest einem anderen Automatisierungsgerät, also z.B. einer übergeordneten Steuerung oder dergleichen, bekannt. Weiterhin ist bekannt, dass im Rahmen einer solchen kommunikativen Verbindung das jeweilige Automatisierungsgerät Daten an das zumindest eine andere Automatisierungsgerät in Form von Datenpaketen mit einzelnen Datenblöcken (frames), die mitunter auch als Telegramme bezeichnet werden, übermittelt und dass eine Mehrzahl von Datenblöcken oder frames nacheinander in einem Kommunikationszyklus übertragen werden.

Ein solcher Kommunikationszyklus führt zu einem festen Zeitraster oder einem festen Zeitfenster, in dem jeweils eine Mehrzahl von Datenblöcken übertragen wird. Indem die Dauer eines Kommunikationszyklus, also die Dauer des jeweiligen Zeitfensters, durch einen festen, vorgegebenen oder vorgebbaren Zeitwert bestimmt ist, ergibt sich eine vorhersehbare Zyklizität der in den Datenblöcken/frames jeweils übermittelten Daten, so dass bei einer ausreichend kurzen Dauer des Kommunikationszyklus/Zeitfensters eine Echtzeitbe- und - verarbeitung der in den einzelnen Datenblöcken übermittelten Daten möglich ist.

Eine solche Echtzeitbehandlung der Daten ist speziell für Antriebssysteme als Beispiel für ein Automatisierungsgerät relevant, weil das oder jedes von einem Antriebssystem angesteuerte Aggregat, also z.B. ein Elektromotor, normalerweise in einer Maschine, z.B. einer Werkzeugmaschine, mit anderen Aggregaten koordiniert werden muss.

Allerdings ist auch bekannt, dass Schalthandlungen in einem solchen Antriebssystem starke elektromagnetische Störungen erzeugen können. Solche Schalthandlungen können auch synchron mit dem Zeitraster der Datenübertragung auftreten, z.B. wenn aufgrund eines in einem Datenblock/frame übertragenen Datums eine Aktivierung eines Aggregats erfolgt und die Aktivierung des Aggregats zu elektromagnetischen Störungen führt. Wenn solche Schalthandlungen oder Ähnliches zu einer Störung der Datenübertragung führen, werden Daten oder Datenblöcke innerhalb eines Kommunikationszyklus gestört. Wenn die Störung periodisch, insbesondere mit derselben oder im Wesentlichen derselben Periode des Kommunikationszyklus auftritt, kommt es immer wieder zu einer Störung an derselben Position innerhalb aufeinander folgender Zeitfenster der zyklischen Kommunikation, so dass dies dazu führen kann, dass bei zyklisch, also in jedem Kommunikationszyklus oder in sonstiger Weise regelmäßig übermittelten Datenblöcken, die innerhalb eines Kommunikationszyklus oft eine feste Position haben, immer wieder derselbe Datenblock gestört wird. Die Folge ist eine Anfälligkeit der jeweiligen Anlage mit einem solchen Automatisierungsgerät, insbesondere einem solchen Antriebssystem, gegen elektromagnetische Störungen, die zum Anlagenstillstand führen kann.

Eine Aufgabe der vorliegenden Erfindung besteht entsprechend darin, ein Verfahren zum Betrieb eines Automatisierungsgeräts, insbesondere eines Antriebssystems als Automatisierungsgerät, anzugeben, mit dem die oben genannten Nachteile vermieden werden.

Diese Aufgabe wird erfindungsgemäß mit den Merkmalen des in Anspruch 1 definierten Verfahrens gelöst. Dazu ist bei einem Verfahren zum Betrieb eines mit zumindest einem anderen Automatisierungsgerät kommunikativ verbundenen Automatisierungsgeräts, wobei das Automatisierungsgerät zumindest an das andere Automatisierungsgerät über die kommunikative Verbindung Daten in Form von zu Datenpaketen zusammengefassten Datenblöcken (frames) übermittelt und wobei eine Mehrzahl von Datenblöcken nacheinander in einem Kommunikationszyklus übertragen werden, vorgesehen, dass in jedem Kommunikationszyklus ein Teil einer Dauer des Kommunikationszyklus für Übertragungswiederholungen reserviert wird und jeder Kommunikationszyklus damit in ein erstes Zeitfenster für Datenblöcke und ein zweites, reserviertes Zeitfenster unterteilt ist und dass ein eventueller fehlerhafter Datenblock im reservierten Zeitfenster erneut übertragen wird. Die Aufteilung eines Kommunikationszyklus in ein erstes und ein zweites Zeitfenster und die damit einhergehende Ergänzung des zweiten Zeitfensters kann grundsätzlich auch als Verlängerung der einzelnen Kommunikationszyklen aufgefasst werden. Das erste Zeitfenster solcher verlängerten Kommunikationszyklen ist der Teil eines jeden Kommunikationszyklus, der zur "normalen" Übertragung von Datenblöcken vorgesehen ist und das zweite Zeitfenster ist dementsprechend die zusätzliche Länge des Kommunikationszyklus.

Der Vorteil der Erfindung besteht in der Aufteilung eines jeden Kommunikationszyklus in ein erstes und ein zweites Zeitfenster. In dem ersten Zeitfenster werden Datenblöcke übermittelt, wie sie bisher bei der Kommunikation zwischen zwei Automatisierungsgeräten übermittelt wurden. Das erste Zeitfenster oder dessen Dauer entspricht also der Dauer bisheriger Kommunikationszyklen, bei denen eine solche Unterteilung nicht vorgesehen war. Das zweite Zeitfenster ist reserviert für eventuelle Wiederholungen fehlerhafter Datenblöcke. Wenn keine fehlerhaften Datenblöcke wiederholt zu übertragen sind, erfolgt während des zweiten Zeitfensters keine Datenübertragung und im Ergebnis verlängert sich die Dauer des Kommunikationszyklus durch das zweite Zeitfenster zumindest geringfügig. Dies ist aber in der Praxis vertretbar. Jedenfalls verhindert die Möglichkeit einer Wiederholung einer Übertragung eventueller fehlerhafter Datenblöcke im reservierten zweiten Zeitfenster einen vollständigen Datenverlust auf der jeweiligen Empfängerseite, wenn aufgrund einer zyklischen Störung immer wieder gleiche Datenblöcke gestört oder zerstört werden, indem das zweite Zeitfenster notwendig innerhalb des Kommunikationszyklus zu einem anderen Zeitpunkt vorgesehen ist als das erste Zeitfenster und Übertragungen von fehlerhaften Datenblöcken im zweiten Zeitfenster dann außerhalb der Zyklizität einer eventuellen zyklischen Störung erfolgen. Auf diese Weise ist sichergestellt, dass es nicht zu einem vollständigen Ausfall der Daten auf Empfängerseite kommen kann, wenn wenigstens in dem reservierten, zweiten Zeitfenster ein vorher eventuell gestörtes und damit wiederholtes Datenblock fehlerfrei übertragen wird.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Eine Ausführungsform des Verfahrens zeichnet sich dadurch aus, dass das zweite, reservierte Zeitfenster im Kommunikationszyklus an das erste Zeitfenster anschließt und dass ein eventueller fehlerhafter Datenblock im selben Kommunikationszyklus im zweiten, reservierten Zeitfenster erneut übertragen wird. Dies minimiert einen Zeitverzug zwischen dem zerstörten oder gestörten Datenblock und der wiederholten Übermittlung desselben Datenblocks.

Eine alternative Ausführungsform des Verfahrens zeichnet sich dadurch aus, dass in jedem Kommunikationszyklus das zweite, reservierte Zeitfenster an das erste Zeitfenster anschließt und dass ein eventueller fehlerhafter Datenblock im nächsten Kommunikationszyklus im zweiten, reservierten Zeitfenster erneut übertragen wird. Alternativ dazu kann auch vorgesehen sein, dass eine Position des zweiten, reservierten Zeitfensters im Kommunikationszyklus variabel ist und dass im Falle eines fehlerhaften Datenblocks im nächsten Kommunikationszyklus das zweite, reservierte Zeitfenster am Anfang des Kommunikationszyklus und vor dem ersten Zeitfenster vorgesehen ist und dass das fehlerhafte Datenblock im nächsten Kommunikationszyklus im zweiten, reservierten Zeitfenster erneut übertragen wird. Wenn bei einem im Kommunikationszyklus vorangestellten zweiten Zeitfenster keine Wiederholungen fehlerhafter Datenblöcke erforderlich sind, kann der Kommunikationszyklus unmittelbar mit dem ersten Fenster beginnen; das zweite Zeitfenster hat dann die Dauer Null. Beide Varianten sind hinsichtlich der Implementation vergleichsweise einfach zu handhaben. Dadurch, dass die erneute Übertragung eines eventuellen fehlerhaften Datenblocks in demjenigen Kommunikationszyklus erfolgt, der an den Kommunikationszyklus anschließt, in dem die Störung aufgetreten ist, die zur Fehlerhaftigkeit des zu wiederholenden Datenblocks geführt hat, ist ein immer noch geringer, zumindest aber vertretbarer Zeitverzug zwischen dem fehlerhaften Datenblock und dem erneut übermittelten Datenblock gewährleistet. Wenn das erneut übermittelte Datenblock im zweiten, reservierten Zeitfenster am Ende oder am Anfang des nächsten Kommunikationszyklus übertragen wird, ist gewährleistet, dass sich für die Position des erneut übertragenen Datenblocks hinsichtlich der periodischen Störung zumindest ein anderer Zeitpunkt ergibt, so dass erwartet werden kann, dass der erneut übertragene Datenblock von der zyklischen Störung nicht beeinflusst wird, so dass ein vollständiger Datenausfall auf der Empfängerseite ausgeschlossen werden kann.

Das Verfahren wie hier und nachfolgend beschrieben kommt speziell für serielle Verbindungen als kommunikative Verbindung, bei denen die Datenblöcke nach einem seriellen Datenübertragungsprotokoll übermittelt werden, in Betracht.

Die oben genannte Aufgabe wird auch mit einem Automatisierungsgerät der eingangs genannten Art, insbesondere einem Antriebssystem, gelöst, das nach dem Verfahren wie hier und im Folgenden beschrieben arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch eine Steuerungseinrichtung in einem Antriebssystem, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch vereinfachte Darstellung eines Automatisierungssystems mit einer Mehrzahl kommunikative verbundener Automatisierungsgeräte,
- FIG 2: eine Illustration eines zeitlichen Ablaufs einer Datenübertragung in Form von zu Datenpaketen zusammengefassten Datenblöcken und einen Einfluss einer zyklischen Störung auf eine solche Datenübertragung,
- FIG 3: eine Aufteilung eines einer zyklischen Datenübertragung zugrunde liegenden, und einen Kommunikationszyklus bestimmenden Zeitrasters in ein erstes und ein zweites Zeitfenster und eine Wiederholung gestörter Datenpakete im zweiten Zeitfenster,
- FIG 4: eine Wiederholung eines gestörten Datenpakets in einem auf die Störung unmittelbar folgenden Kommunikationszyklus und
- FIG 5: eine Wiederholung eines gestörten Datenpakets in einem auf die Störung unmittelbar folgenden Kommunikationszyklus und zwar in einem in diesem Zyklus auf das erste Zeitfenster folgenden zweiten Zeitfenster.

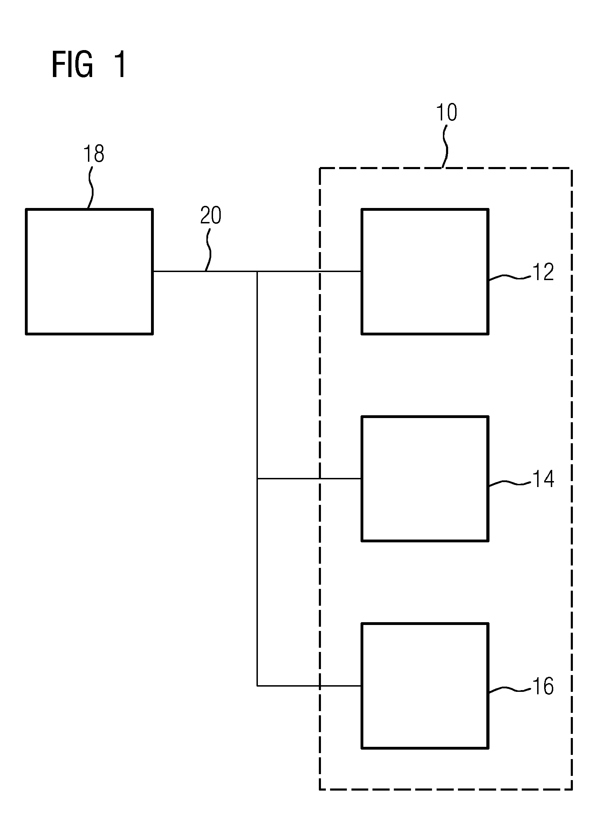

FIG 1 zeigt schematisch vereinfacht eine Maschine 10, z.B. eine Werkzeugmaschine, und davon umfasste Antriebssysteme 12, 14, 16. Die Antriebssysteme 12, 14, 16 sind untereinander und mit einer übergeordneten Steuerung 18 kommunikativ verbunden. Die übergeordnete Steuerung 18 kann auch von der Maschine 10 umfasst sein. Als kommunikative Verbindung 20 kommt eine serielle Verbindung in Betracht, über die die Einheiten, also die Antriebssysteme 12, 14, 16 und die übergeordnete Steuerung 18, Daten, zum Beispiel Steuerbefehle, Sollwerte, Messwerte, usw. austauschen können. Die oben genannten Einheiten werden im Folgenden allgemein auch als Automatisierungsgeräte 12-16, 18 bezeichnet und sind hier stellvertretend für grundsätzlich beliebige Automatisierungsgeräte 12-16, 18 exemplarisch herangezogen.

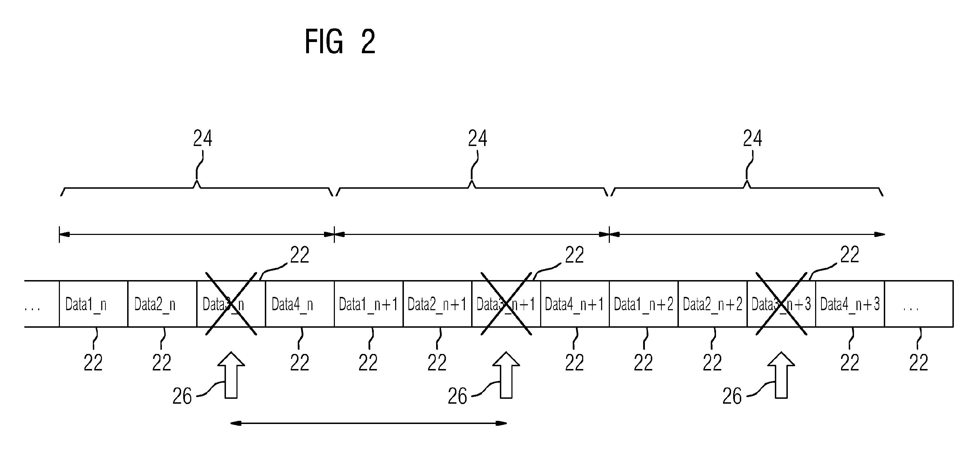

Wenn die kommunikative Verbindung eine serielle Verbindung ist, und davon soll im Nachfolgenden ausgegangen werden, werden über die kommunikative Verbindung zu Datenpaketen zusammengefasste Datenblöcke 22 (FIG 2) nach einem seriellen Datenübertragungsprotokoll zwischen den einzelnen Automatisierungsgeräten 12-16, 18 übermittelt.

FIG 2 zeigt ein Beispiel für über eine kommunikative Verbindung 20 (FIG 1) übermittelte Datenblöcke 22, die in der Fachterminologie auch als frames bezeichnet werden. Erkennbar ist, dass die Datenblöcke 22 zu Datenpaketen zusammengefasst sind und in einem festen Zeitraster übermittelt werden. Die Dauer eines solchen Zeitrasters wird hier und im Folgenden als Kommunikationszyklus 24 bezeichnet. Unmittelbar an einen Kommunikationszyklus 24 schließt sich ein nächster Kommunikationszyklus 24 an und dies wiederholt sich, solange die Datenübertragung zwischen den Automatisierungsgeräten 12-16, 18 erfolgt. Anhand der symbolischen Bezeichnung der einzelnen Datenblöcke 22 mit "Data1", "Data2", usw. ist erkennbar, dass, wie dies in einem Echtzeitsystem üblich ist, in aufeinander folgenden Kommunikationszyklen 24 fortwährend gleiche Daten, also zum Beispiel Messwerte eines Sensors oder Sollwerte für einen Aktor, übertragen werden. Verschiedene Datenblöcke 22 haben dabei meist auch eine feste Position innerhalb des Datenpakets und des von einem Kommunikationszyklus 24 umfassten Zeitfensters, der in jedem Kommunikationszyklus 24 in FIG 2 durch jeweils einen horizontalen Doppelpfeil dargestellt ist.

Über diese an sich bekannte Situation hinaus ist in FIG 2 dargestellt, dass Störungen 26 (symbolisch durch einen Blockpfeil dargestellt), also z.B. elektromagnetische Störungen, zu einer Verfälschung oder Zerstörung übertragener Datenblöcke 22 führen können. Dies ist in der Darstellung in FIG 2 dadurch angedeutet, dass einzelne Datenblöcke 22 durchgestrichen sind. Zu solchen Störungen 26 kann es kommen, wenn Schalthandlungen in einer Maschine 10 (FIG 1) starke elektromagnetische Felder und damit elektromagnetische Störungen erzeugen und sich diese auf die Datenübertragung auswirken. Weil solche Schalthandlungen üblicherweise mit den in den Datenblöcken 22 übertragenen Daten korreliert sind, z.B. wenn die Daten Ansteuerbefehle oder geänderte Sollwerte für Aktoren der Maschine 10 umfassen, können entsprechend auch die Störungen 26 synchron mit dem Zeitraster der Datenübertragung auftreten. Dann kann es dazu kommen, dass stets der gleiche Datenblock 22, hier der Datenblock 22 mit den symbolisch als "Data3" bezeichneten Daten, betroffen ist und dass eine solche zyklische Störung zu einem vollständigen Ausfall der jeweiligen Daten auf Empfängerseite führt. Die Folge ist eine Anfälligkeit der jeweiligen Anlage, also z.B. der Maschine 10, für elektromagnetische Störungen, die auch zum Anlagenstillstand führen kann.

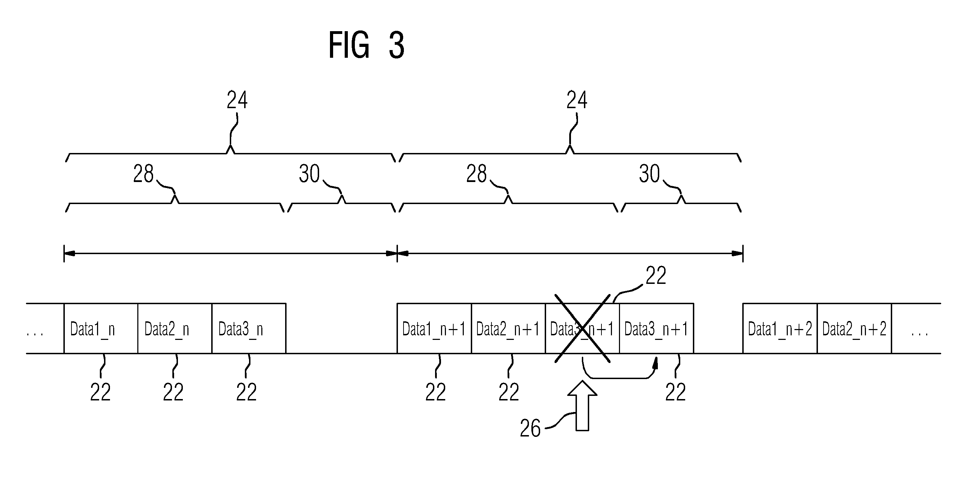

FIG 3 zeigt, dass zur Vermeidung solcher Verluste von Datenblöcken 22 der Kommunikationszyklus 24 in ein erstes Zeitfenster 28 und ein zweites Zeitfenster 30 unterteilt ist. Das erste Zeitfester 28 steht für die Übertragung von Datenblöcken 22 wie bisher zur Verfügung. Das erste Zeitfenster 28 in der Darstellung in FIG 3 kann damit im Grunde als Kommunikationszyklus 24 wie in FIG 2 dargestellt aufgefasst werden. Das zweite Zeitfenster 30, das auch als reserviertes Zeitfenster 30 bezeichnet wird, steht für Wiederholungen eventueller fehlerhafter Datenblöcke 22 zur Verfügung. In FIG 3 ist dies für eine Störung 26 im zweiten dargestellten Kommunikationszyklus 24 gezeigt. Der betroffene Datenblock 22 mit den davon symbolisch als "Data3" umfassten Daten wird im selben Kommunikationszyklus 24 in dem an das erste Zeitfenster 28 anschließenden zweiten, reservierten Zeitfenster 30 wiederholt. Ein Datenausfall auf Empfängerseite ist damit vermieden.

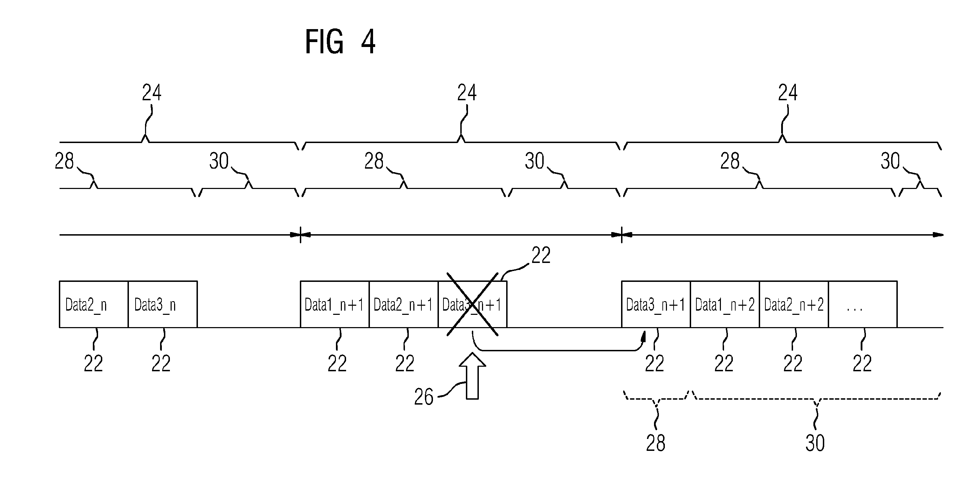

FIG 4 zeigt eine Situation, bei der ein fehlerhafter Datenblock 22 im unmittelbar folgenden Kommunikationszyklus 24 wiederholt wird. Dargestellt ist eine Situation, bei welcher der wiederholte Datenblock 22 am Anfang der zur Übermittlung in diesem Kommunikationszyklus 24 vorgesehenen Datenblöcke 22 übertragen wird. Zu dieser Situation sind zwei Sichtweisen möglich. Entweder fasst man die Übermittlung des zusätzlichen Datenblocks 22, nämlich des wiederholten Datenblocks 22, als Verlängerung des ersten Zeitfensters 28 und entsprechende Verkürzung des zweiten Zeitfensters 30 auf oder man fasst die Übermittlung des wiederholten Datenblocks 22 vor allen anderen zur Übermittlung in diesem Kommunikationszyklus 24 vorgesehenen Datenblöcken 22 als eine Positionierung des zweiten, zur Wiederholung eventueller fehlerhafter Datenblöcke 22 vorgesehenen Zeitfensters 30 vor dem ersten Zeitfenster 28 auf. Diese letztere Betrachtungsvariante ist in der Darstellung in FIG 4 zusätzlich unterhalb der im letzten Kommunikationszyklus 24 übermittelten Datenblöcke 22 gezeigt. Zur Unterscheidung sind die dortigen Klammern, die die Zeitdauern des ersten und zweiten Zeitfensters 28, 30 darstellen, gestrichelt eingezeichnet. Die Darstellung lässt außer Acht, dass vorgesehen sein kann, dass das zweite Zeitfenster 30 unabhängig davon, ob es einem Kommunikationszyklus 24 vor oder nach dem ersten Zeitfenster 28 vorgesehen ist, eine feste Dauer haben kann, so dass sich zwischen dem zweitem Zeitfenster 30 und dem erstem Zeitfenster 28 und den dort jeweils übertragenen Datenblöcken 22 ein Zeitraum ergeben kann, in dem keine Datenübertragung stattfindet.

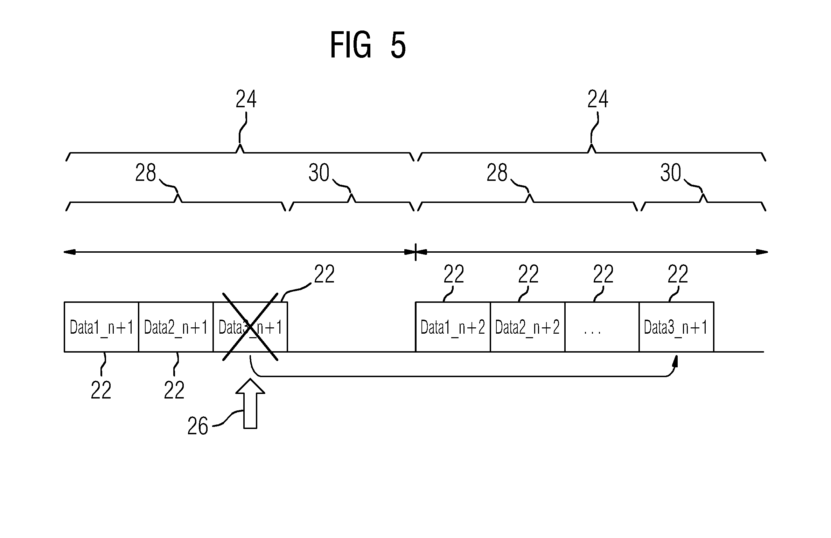

FIG 5 zeigt dazu schließlich eine Konstellation, bei der ein gestörter Datenblock 22 im nächstfolgenden Kommunikationszyklus 24 im zweiten Zeitfenster 30 im Anschluss an das dortige erste Zeitfenster 28 übertragen wird.

Jedes Automatisierungsgerät 12-16, 18 weist zur Durchführung des Verfahrens in an sich bekannter Art und Weise eine Verarbeitungseinheit (nicht dargestellt) in Form von oder nach Art eines Mikroprozessors und einen Speicher (ebenfalls nicht dargestellt) auf. In dem Speicher befindet sich ein Steuerungsprogramm, das im Betrieb des Automatisierungsgeräts 12-16, 18 durch die jeweilige Verarbeitungseinheit ausgeführt wird und durch dessen Ausführung sich die Ausführung des Verfahrens sowie eventueller weiterer Funktionalitäten des jeweiligen Automatisierungsgeräts 12-16, 18 ergibt.

Die Umsetzung von zu übertragenden Nutzdaten in Datenblöcke/frames 22 und deren Zusammenfassung zu Datenpaketen erfolgt heutzutage in hochintegrierten Bausteinen. Der Ansatz gemäß der Erfindung und sämtliche Ausgestaltungen, also die Reservierung eines Teils einer Dauer eines Kommunikationszyklus 24 für Übertragungswiederholungen oder eine entsprechende Verlängerung des Kommunikationszyklus 24 und die Zuteilung zu übertragender und zu eventueller zu wiederholender Datenpakete zu bestimmten Abschnitten des Kommunikationszyklus 24 kann vollständig in solche Bausteine integriert werden. Externe Bauteile sind nicht erforderlich. Für die Umsetzung des hier beschriebenen Verfahrens fallen daher keine nennenswerten Kosten an. Der sogenannte Mikrocode für einen solchen hochintegrierten Baustein, also z.B. einen ASIC oder dergleichen, ist ein Beispiel für ein Computerprogramm mit Programmcode-mitteln, um alle Schritte des Verfahrens und seiner Ausgestaltungen wie hier beschrieben auszuführen. Ein nach dem Verfahren arbeitendes Automatisierungsgerät 12, 14, in dem das hier beschriebene Verfahren oder eines seiner Ausgestaltungen implementiert ist, weist in an sich bekannter Art eine Verarbeitungseinheit in Form von oder nach Art eines Mikroprozessors und einen Speicher auf, in den ein Computerprogramm zur Ausführung des Verfahrens und etwaiger Ausführungen geladen ist oder einen hochintegrierten Baustein, also z.B. einen Schnittstellenbaustein, der für den Zugriff auf die kommunikative Verbindung 22 gleichzeitig als Verarbeitungseinheit und aufgrund des integrierten Mikrocodes auch als Speicher für ein in Form des Mikrocodes umgesetzten Computerprogramms fungiert.

## Patentansprüche

1. Verfahren zum Betrieb eines mit zumindest einem anderen Automatisierungsgerät (12-16, 18) kommunikativ verbundenen Automatisierungsgeräts (12-16, 18), wobei das Automatisierungsgerät (12-16, 18) zumindest an das andere Automatisierungsgerät (12-16, 18) über die kommunikative Verbindung Daten in Form von zu Datenpaketen zusammengefassten Datenblöcken (22) übermittelt und wobei eine Mehrzahl von Datenblöcken (22) nacheinander in einem Kommunikationszyklus (24) übertragen werden,
**dadurch gekennzeichnet, dass** in jedem Kommunikationszyklus (24) ein Teil einer Dauer des Kommunikationszyklus (24) für Übertragungswiederholungen reserviert wird und jeder Kommunikationszyklus (24) damit in ein erstes Zeitfenster (28) für Datenblöcke und ein zweites, reserviertes Zeitfenster (30) unterteilt ist und dass ein eventueller fehlerhafter Datenblock (22) im zweiten, reservierten Zeitfenster (30) erneut übertragen wird.

2. Verfahren nach Anspruch 1, wobei das zweite, reservierte Zeitfenster (30) im Kommunikationszyklus (24) an das erste Zeitfenster (28) anschließt und wobei ein eventueller fehlerhafter Datenblock (22) im selben Kommunikationszyklus (24) im zweiten, reservierten Zeitfenster (30) erneut übertragen wird.

3. Verfahren nach Anspruch 1, wobei in jedem Kommunikationszyklus (24) das zweite, reservierte Zeitfenster (30) an das erste Zeitfenster (28) anschließt und wobei ein eventueller fehlerhafter Datenblock (22) im nächsten Kommunikationszyklus (24) im zweiten, reservierten Zeitfenster (30) erneut übertragen wird.

4. Verfahren nach Anspruch 1, wobei eine Position des zweiten, reservierten Zeitfensters (30) im Kommunikationszyklus (24) variabel ist und wobei im Falle eines fehlerhaften Datenblocks (22) im nächsten Kommunikationszyklus (24) das zweite, reservierte Zeitfenster (30) am Anfang des Kommunikationszyklus (24) und vor dem ersten Zeitfenster (28) vorgesehen wird und wobei das fehlerhafte Datenblock (22) im nächsten Kommunikationszyklus (24) im zweiten, reservierten Zeitfenster (30) erneut übertragen wird.

5. Verfahren nach einem der vorangehenden Ansprüche, wobei die kommunikative Verbindung eine serielle Verbindung ist und wobei die Datenblöcke (22) nach einem seriellen Datenübertragungsprotokoll übermittelt werden.

6. Verfahren nach einem der vorangehenden Ansprüche, wobei eine Dauer eines Kommunikationszyklus durch einen festen, vorgegebenen oder vorgebbaren Zeitwert bestimmt ist.

7. Computerprogramm mit Programmcode-Mitteln, um alle Schritte von jedem beliebigen der Ansprüche 1 bis 6 durchzuführen, wenn das Programm auf einem Automatisierungsgerät (12-16, 18) zur Steuerung, Überwachung und/oder Beeinflussung eines technischen Prozesses ausgeführt wird.

8. Antriebssystem (12-16) mit einer Verarbeitungseinheit und einem Speicher in den ein Computerprogramm nach Anspruch 7 geladen ist, das im Betrieb des Gerätes durch die Verarbeitungseinheit ausgeführt wird.
